# EUROPEAN PATENT SPECIFICATION

(11) **EP 2 419 474 B1**
(45) Date of publication and mention of the grant of the patent: **28.11.2018**
(21) Application number: 10715209.2
(22) Date of filing: 16.04.2010
(51) Int. Cl.: C08L 95/00, C09D 195/00, C08J 3/12, E01C 5/00

(54) **JOINT FILLER MATERIAL**
FUGENFÜLLMASSE
MATÉRIAU DE REMPLISSAGE

(30) Priority: 17.04.2009 NO 20091508
(43) Date of publication of application: 22.02.2012
(73) Proprietor: Sopekosten AS, 4048 Hafrsfjord (NO)
(72) Inventor: Grønli John Charles, 4048 Hafrsfjord (NO)
(74) Representative: Protector IP Consultants AS
(86) International application number: PCT/EP2010/055045
(87) International publication number: WO 2010/119123

(56) References cited:
- EP-A1- 1 247 839
- DE-A1- 10 007 298
- JP-A- 11 152 477
- US-A- 3 235 483
- US-A- 3 762 975
- US-A- 3 958 067
- US-A- 4 769 288

## Description

The invention relates to a method for preparation of a particulate joint filler comprising at least an elastoplastic binder, adapted to be used for shaping of a joint sealing or continuous cover, and a method for joint filling with said particulate joint filler. The particulate joint filler is provided by the method: to shape particles from a bitumen based material by separating the particles from a viscous phase of the bitumen based material; to cool the separated particles to a solid phase; and to store the particles at a first temperature sufficiently low to hinder fusion melting of the particles until the cooled joint filler particles are arranged into a groove between elements to be joined; and the adhesive properties of the joint filler particles are then activated so that the material particles gradually melts to a homogenous mass.

It also describes a joint material for use with the method.

When using pavement blocks, etc.,such as street stone of a suitable rock and pavement blocks of concrete or brick, as pavements on, for example traffic areas, it is required to fill gaps that providing space between adjacent blocks, , etc., with a joint material, so that each element will remain stable. Inter alia high traffic load, application of sweepers and running water due to flushing, washing or precipitation, lead to stress and washing out of the joints, and there has long existed a need for stronger joint material than gravel, sand and cement based materials. Cement -based sealant materials also lack the necessary flexibility required for heavily loaded traffic areas. The above joint materials are not dense, and it is often desirable that a joint of such species do not slip through the water but the water can run off the surface and not penetrate into the masses under the pavement blocks.

In the further description the term "pavement block" is used for all types of stone or blocks used as a layer on the road, parking and other traffic areas.

Because of their strength, flexibility and density have bitumen based products in a certain extent been used as joint material in the field. Bitumen, such as Shell Mexphalte C Joint P3J, entered into the joints in liquid form by using suitable means, such as through a hose with nozzle that can be brought down in the joint to be filled. Liquid bitumen must be heated to 120-140 ° C. Application of liquid bitumen is labor intensive and complicated. It takes time to heat the bitumen mixture until it is flowing, the joints should be dry by the application and it is a meticulous and demanding work to position the application at the scene to direct the liquid mixture into all the joints. The application often results in an unsightly mess of bitumen on exposed rock surface.

It is known that bitumen particles in temperate climates gradually transform into a homogeneous mass by slow melting. A bitumen granule applied a temperate pavement, will easily stick to the pavement. It is therefore not possible to fill the joints between blocks with temperate bitumen granules as for a cause joint sand.

Another area where bitumen-based material or other adhesives are used, heated to a liquid state, is for example roofing, where plate material in the form of isolation and the sealing materials (cardboard, etc.) are glued to the underlying structures by the liquid bonding agent applied to surfaces to be covered with the overlying plate material. The labor is demanding and to some extent risky in terms of fire danger, as it often working with open flame.

From U.S. 3958067 is a particulate asphalt with particles from about 0,074 to about 19 mm in the form of polyeder with at least one sharp angle known. The asphalt is of a very rigid type where heating to 170-250 ° C is prescribed . It maintains its particulate shape at usual room and ambient outside temperature.

Further relevant art can be fouind in the patent publications EP 1247839, DE 10007 298, US 4769288, JP 11 15 2477, US 53762975 and US 3235483.

The invention aims to remedy or reduce at least one of the disadvantages of known technique, which is achieved by features specified in the following description and in subsequent patent claims.

The invention provides a method for preparation of a particulate joint filler comprising at least an elastoplastic binder, to be used for shaping of a joint sealing or continuous cover. The method is distinguished in that it comprises the steps:
to shape particles from an elastoplastic bitumen based material that become sticky at a temperature between 0 °C and 40 °C, by separating the particles from a viscous phase of the bitumen based material;
to cool the separated particles to a solid phase; and
to store the particles at a first temperature sufficiently low to hinder fusion melting of the particles, wherein said first temperature is at maximum 20 °C above the Fraas breaking point of the elastoplastic bitumen.

Accordingly, the invention provides a method for preparation of a particulate joint filler comprising at least an elastoplastic binder in the form of a bitumen based material with a melting temperature sufficiently low to provide fusion melting of the particles to an in substance homogenous mass adhering to adjacent surfaces at a moderate ambient temperature. The particles are produced from bitumen based materials in viscous state and are then cooled and stored at a relative low temperature, typical - 10 °C or lower. The storage temperature at which the particles are stable depend on the Fraas breaking point of the bitumen based particles, which is a well known material characteristic property, known from inter alia European Standard EN 12593 and equivalent. For joint filling, typically for filling ordinary joints between pavement blocks of a traffic area or between building plates, the particulate joint filler is distributed by convenient means to a desired level of filling or layer when the temperature of the particles still is low enough to prevent adhesion. Then the temperature is increased by heat exchange with the surroundings or by supply of heat by a heater. Thereby the particles adhere to each other and to adjacent surfaces, forming a joint.

The invention also provides a method of joint filling with a particulate joint filler provided according to the method of the invention, distinctive in that the method comprises the steps:
to arrange the joint filler particles in a groove between elements to be joined, and
to fusion melt the particles to an in substance homogenous mass adhering to
   adjacent surfaces at ambient temperature between 0 °C and 40 °C.

In addition, the invention provides a particulate joint filler material for working the joint filling method of the invention, comprising a plurality of joint filler particles formed by at least one elastoplastic binder based on natural, modified or synthetic bitumen, wherein the particles are formed by separating particles from a viscous phase of the bitumen based material, the separated particles are cooled to a solid phase, distinguished in that the elastoplastic bitumen based material become sticky at a temperature between 0 °C and 40 °C, which temperature corresponds to the Fraas break point of the material + 20 °C.

Accordingly, the invention concerns a particulate joint filler material with material properties and use as described above. The particles are preferably of relatively uniform shape and size to provide good flow properties in the particle mass in order to ensure proper cooling and small inter-contact surfaces between particles. The particles are typically provided by extrusion, moulding or casting, as the particles are given the form of a cylindrical or polygonal extrusion body or spherical or polygonal casting body. Other forming processes may also be relevant.

For special purposes it is appropriate to use a mixture of several particle sizes, for example, to reduces depression in the joint when the particles melt into a dense mass. Such particle mixing occurs preferably immediately before joint filling to maintain the benefits of a uniform particle size during production, cooling and storage.

The second temperature may preferably be equal to the maximum Fraas-break point for the bitumen-based material.

The particles can be cooled by being mixed with dry ice particles, liquid nitrogen, refrigerated ethanol or refrigerated methanol.

Joint material particles can be made of a mixture of the elastic plastic binder and a second material at least partially enclosed by the elastoplastic binder.

The second material can be a particulate mineral material.
The second material can be an electrically conductive material.

Joint material particles can before they are used be applied an adhesive-improving agent, which is to improve the particulate material's adhesion to a surface.

The adhesive improvement agent can be a bitumen-based emulsion.

A gas can be injected into the viscous, bitumen-based materials in order to provide porous particles.
The invention relates in a second aspect to a method of joint filling with a particulate joint filler material as described above-by, distinctive in that the procedure comprises the step: to put joint filler material particles in a joint or crevice between the elements to be joined.

The procedure may include the further step: to activate the adhesive properties of the joint filler particles so that the material particles gradually melt into a functional mass.

The adhesive properties of the elastoplastic binder can be brought out by chemical activation.

Joint filler material particles can be mixed with a chemical activator that is adapted to generate fusion of the particles.

The adhesive properties of the elastoplastical binder can be brought out by thermal influence.

The adhesive properties of the material can be activated at a second temperature that is higher than the first temperature.

The second temperature may be at least 20 ° C above the Fraas-break point.

The thermal activation of the adhesive properties of the particles can be provided by heating to the ambient temperature at temperature equalizing to the adjacent joint surfaces and ambient air. Alternatively, the thermal activation of the particle mass' adhesive properties can be provided by heating with a heater.

When the second material is an electrically conductive material, the thermal activation of the joint material particles can be provided by induction heating.

Joint can be refilled by scraping or brushing of joint filler particles from areas adjacent joint surfaces.

The items to be joined, may be obtained from the group pavement blocks for a traffic area, aggregate material for road surface and plate-shaped building materials.

Different size fractions of joint material particles can be mixed immediately before material particles are placed in the joint between the elements to be joined.

A heated cover material in particle form can be supplied the top part of the joint and forced at least partially into the joint material.

In a third aspect the invention concerns a particulate joint filler material comprising a plurality of joint filler particles formed by at least one elastoplastic binder based on natural, modified or synthetic bitumen, distinctive in that the particles are formed by separating particles from a viscous phase of the bitumen based material, the separated particles are cooled to a solid phase.

The anti-adhesive properties of the natural, modified or synthetic bitumen due to thermal effect is present only at a temperature below the Fraas break point + 20 °C.

The joint filler particles can be covered with an adhesive enhancer adapted to improve the elastic plastic adhesivity of the binder to a groove surface.

The adhesive enhancer preferably is a bitumen based emulsion.

The joint filler particles preferably exhibit an in substance uniform shape and size.

The joint filler particles preferably exhibit a cross section area in the range 10 to 155 mm².

The joint filler mixture may comprise dry ice particles, liquid carbon dioxide, liquid nitrogen, cooled ethanol or cooled methanol.

The joint filler mixture preferably comprises at least one colour agent.

The joint filler mixture may comprise one or more fillers that partly may be covered by the elastic plastic binder. The filler is can be a mineral, be electrically conductive and/or comprise at least one fiber material.

The joint filler material may comprise one or more chemical activator compounds embedded in pressure sensitive capsules.

The particles may comprise several closed, gas filled pores.

The following describes an example of a preferred embodiment that is illustrated in accompanying drawings, of which:
Fig 1 shows a greatly enlarged, schematic cross section through a first embodiment example of a joint filler particle according to the invention,
Figure 2 shows a schematic cross section through a second embodiment example of a joint filler particle according to the invention;
Fig. 3 shows a schematic cross section through a third embodiment example of a joint filler particle according to the invention,
Fig 4 shows a schematic perspective drawing of a section of a traffic area covered with pavement blocks, where the intermediate joints are filled with joint filler material according to the invention, and
Figure 5 shows a schematic perspective drawing of a section of a roof structure covered with a plate-shaped building material that is glued to the under layer with a material according to the invention.

On the figure reference number 1 indicates a joint filler particle comprising a core 11 comprising an elastic plastic binder. The particle 1 is coated with a layer 12 comprising an adhesive agent that enhance adhesive properties to surfaces that temporarily or permanently have poor adhesion, for example due to moisture.

A elastic plastic (elastoplastic) binder means in this context, a material that is both elastic and viscous (viscous) at a temperature between 0 and 40 ° C. Bitumen is an example of such material. Bitumen is the basis for a wide range of materials, with bitumen in natural form or modified. Synthetic bitumen is also considered to belong to this material group.

A wide range of materials and material mixtures have similar characteristics, such as:
- Rubber Modified binders SBS, SIS, SBR, natural rubber, etc. For example in roofing felt, the bitumen is modified bitumen, in Norway it is the most SBS
- Thermoplastic modified binder PE, PP, PVC, EVA etc.
- Emulsions of these with adhesion-promoting substances such as amine
- Dyes
- The admixing of oil and / or wax changes the material properties.

Common for such materials is that their adhesion is temperature dependent. In the present invention it will for some climate zones be desirable to use materials which adhesion occurring when the material temperature exceeds for example 10 ° C, whereas for warmer climates it can be desirable to use materials that will be sticky at higher temperature, such as 20-30 ° C.

The adhesive-enhancing agent 12 may be an aqueous emulsion. This will have a melting point of approx. 0 ° C. Water-based emulsion exhibits excellent adhesive properties and are relatively easy to deal with such as in a manufacturing process.

In an alternative material embodiment the core 11 comprises a material developing adhesion by chemical exposure, such as by mixing of particles and / or liquids that can react chemically with the base material, so that the physical and chemical properties of the core material change after heating.

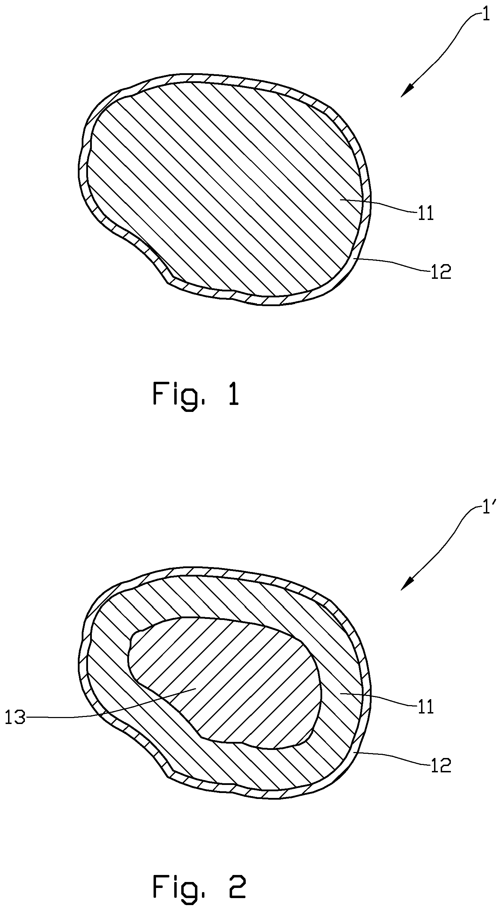

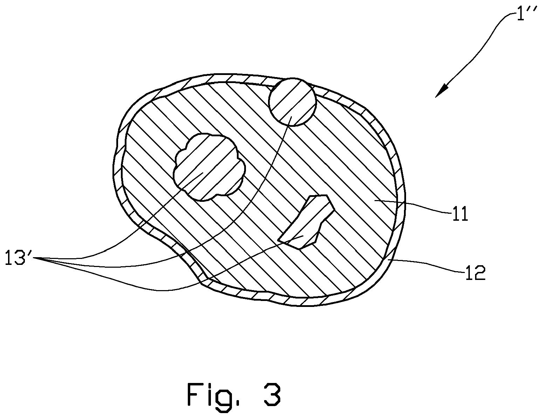

Figure 2 shows an alternative particle embodiment 1' where a mineral material 13 in particle form is enclosed in the elastoplastic binder 11. The mineral material 13 may typically be a natural sand or gravel particle or crushed rock material. Although Figure 2 shows only one mineral particle 13 contained in the binder 11, it is obvious that it is within the invention to mix many mineral particles in a joint material particle 1', in a similar manner as illustrated in Figure 3. It is also within the invention that the particles 13 is only partly enclosed in the binder 11.

The particle 1'in Figure 2 are in the same manner as described above, covered with a layer 12 comprising an adhesion improvement agent.

The purpose of the application of the mineral material 13 may be to reduce the material cost or to regulate the particle-1's own weight, as the mineral material 13 exhibits greater weight than the binder 11.

A further alternative particle embodiment 1" is shown in Figure 3, where several particles 13' of an electrically conductive material are enclosed in binder 11. Particle 1" is in the same manner as described above, covered with a layer 12 containing an adhesion improving agent.

The purpose of the admixture of electrically conductive material particles 13 in the binder 11 is being able to take advantage of such materials ability to be heated under the influence of an alternating magnetic field, ie, induction heating. It is obvious to use iron-containing particles, but also other material may be relevant. A secondary effect of using particles 13 of iron or other heavy materials is that they increase the joint material particle's 1 own weight in the same manner as the admixture of the mineral particles 13 in the binder 11 according to figure 2.

A particulate joint filler material is made of a variety of joint filler particles 1, alternatively 1' or 1", or a mixture thereof. When the particles 1, 1', 1" material properties makes it necessary to lower the temperature of the joint material to avoid that the particles become sticky and thus forming a coherent mass before posting, keep the temperature at a level that hinder the binder from being viscous. This can be done by known freezing or cooling techniques and transport in isolated transport devices. The invention includes using dry ice (cooled CO2) particles in the joint filler material. It is also included to use liquid nitrogen or cooled ethanol as a coolant.

Particles 1, 1', 1" exhibit a relatively uniform size and shape. The purpose of this is to provide a particle mass of relatively large pore volume, which results in good flow of cooling medium and minimal mutual contacts between the particles 1, 1 ', 1". Examples of useful particle size and shape is in substance spherical with a diameter of ca. 4, 6, 8, 10, 12 or 14 mm, representing a cross section respectively approx. 13, 28, 50, 78, 113 and 154 mm2.

To reduce the pore volume in a particle-filled joint, it may be appropriate to mix several size fractions immediately before filling. This reduces material depression when particles 1, 1', 1" melts and form a homogeneous joint.

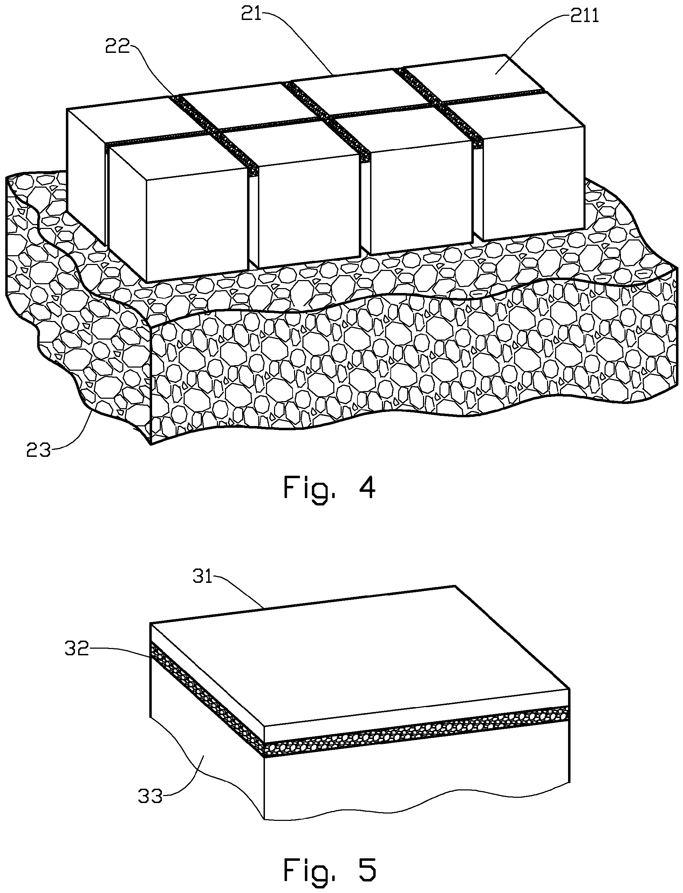

Figure 4 shows an in itself known assembly of a number of pavement blocks 21, such as street hewn stone, which make a surface 211 on a road 23. Blocks 21 lie with a prescribed distance apart, whereby joints for stability and the need for the road surface characteristics are filled with a joint filler material 22. Said material 22 is composed of a diversity of filler material particles 1 of the types described above.

Cooled material particles 1, 1', 1" are spread out over the area to be filled, and are brought by gravity and mechanical means into the joints. Particles 1, 1', 1' that will remain on the surface 211 of pavement blocks 21, are scraped / brushed into the joints in itself known manner. The joint filler material 22 can be compressed in known way by use of vibrator or the like so that the material 22 fills the joints sufficiently.
A further use for the joint filler material is shown in Figure 5, where a building construction 33, such as insulation material on a flat roof, is applied a layer 32 of joint filler material to glue a sealing roofing 31 to building structure 33.

When the joint material is put between the elements 21, respectively 31, 33 to be joined, ambient temperature make the temperature of the particles 1 rise and become viscous and sticky. Gradually the particulate joint material transforms to a homogenous material layer that adheres to the adjacent elements 21, respectively 31, 33. If the ambient temperature is low, or if there is a need for a rapid homogenization and adhesion, it is convenient to use a heater for local heating of the material, such as using radiant heat.

For material comprising electrically conductive material particles 13', the heating of the joint material can be with an induction heater.

When using chemical activation of the binder in the joint-material particles 1, 1 ', 1', the chemical activator can be added to the sealant material after the joint material is put into the joints. Alternatively, the activator can be present in the joint material in small containers which by the compression of the joint filler material are crushed and the contents spread out. Alternatively, chemical activation is done by heating as described above.

In a not shown embodiment a heated cover material is applied to the joint, such as mineral sand in a suitable fraction, which by its own weight or by applying a load is pushed partially into the joint material 22 providing a cover over the joint material 22.

It is natural for a professional with knowledge of the invention also to apply the procedure and the joint material at the joining of other materials, such as making of an asphalt road surface under climatic conditions that make it difficult to lay hot asphalt lots in a conventional manner. By laying out a mixture of ordinary aggregate material (mineral particles of desired size, such as pebble) and the joint material according to the invention, and then heating, a continuous cover can be prepared.

## Claims

1. Method for preparation of a particulate joint filler comprising at least an elastoplastic binder (11), to be used for shaping of a joint sealing or continuous cover, **characterised in that** the method comprises the steps:
to shape particles from an elastoplastic bitumen based material that become sticky at a temperature between 0 °C and 40 °C, by separating the particles from a viscous phase of the bitumen based material;
to cool the separated particles to a solid phase; and
to store the particles at a first temperature sufficiently low to hinder fusion melting of the particles, wherein said first temperature is at maximum 20 °C above the Fraas breaking point of the elastoplastic bitumen.

2. Method according to claim 1, wherein the first temperature is about at the Fraas breaking point temperature.

3. Method according to claim 1, wherein the joint filler particles before use are coated with an adhesive enhancing agent (12) that is adapted to improve the adhesion of the particulate joint filler to a surface, wherein the adhesive enhancing agent (12) is a bitumen based emulsion.

4. Method of joint filling with a particulate joint filler provided according to any one of claim 1-3, **characterised in that** the method comprises the steps :
to arrange the joint filler particles in a groove between elements (21,31,33) to be joined, and
to fusion melt the particles to an in substance homogenous mass adhering to
adjacent surfaces at ambient temperature between 0 °C and 40 °C.

5. Method according to claim 4, wherein the adhesive properties of the elastoplastic binder (11) is increased by heat exchange with the surroundings.

6. Method according to claim 4 or 5, wherein :
- the adhesive properties of the joint filler particles is activated at a temperature minimum 20 °C above the Fraas breaking point.

7. Method according to claim 4, wherein
- the thermal activation of the adhesive properties of the joint filler particles is provided by heating them to ambient temperature by heat exchange with adjacent grooves and air.

8. Method according to claim 4, wherein the thermal activation of the adhesive properties of the joint filler particles is provided by heating them with a heater.

9. Method according to claim 4, **characterised in that**
- the groove is filled up by scraping or brushing joint filler particles from surfaces adjacent the groove surfaces, or
- elements (21,31,33) to be joined , are from the group pavement stones (21) for traffic areas, aggregates for roads and plate shaped building materials (31,33), or
- different size fractions of the joint filler particles are mixed directly before the joint filler particles are arranged in the groove between elements (21,31,33) to be joined, or
- a heated particulate cover material is added to the upper part of the groove and pressed at least partly into the joint filler material.

10. Particulate joint filler material for working the method of any of claim 4-9, comprising a plurality of joint filler particles formed by at least one elastoplastic binder (11) based on natural, modified or synthetic bitumen, wherein the particles are formed by separating particles from a viscous phase of the bitumen based material, the separated particles are cooled to a solid phase, **characterised in that** the elastoplastic bitumen based material become sticky at a temperature between 0 °C and 40 °C, which temperature corresponds to the Fraas break point of the material + 20 °C.

11. Particulate joint filler material according to claim 10, **characterised in that** the anti-adhesive properties of the natural, modified or synthetic bitumen due to thermal effect is present only at a temperature below the Fraas break point + 20 °C.

12. Particulate joint filler material according to claim 10, **characterised in that**
- the joint filler particles are covered with an adhesive enhancer (12) adapted to improve the elastic plastic adhesivity of the binder (11) to a groove surface.

13. Particulate joint filler material according to claim 10, **characterised in that** the joint filler mixture comprises one or more fillers (13,13').

14. Particulate joint filler material according to claim 10, **characterised in that** the joint filler particles (1,1',1") exhibit an in substance uniform shape and size, the joint filler particles (1,1',1") exhibit a cross section area in the range 10 to 155 mm².

## Patentansprüche

1. Verfahren zur Herstellung einer teilchenförmigen Fugenfüllmasse, umfassend mindestens ein elastoplastisches Bindemittel (11), das zum Formen einer Fugenabdichtung oder einer durchgehenden Abdeckung verwendet werden soll, **dadurch gekennzeichnet, dass** das Verfahren die folgenden Schritte umfasst:
Formen von Teilchen aus einem elastoplastischen Bitumen-basierten Material, das bei einer Temperatur zwischen 0 °C und 40 °C klebrig wird, durch Abtrennen der Teilchen von einer viskosen Phase des Bitumen-basierten Materials; Kühlen der abgetrennten Teilchen zu einer festen Phase; und
Lagern der Teilchen bei einer ersten Temperatur, die ausreichend niedrig ist, um Zusammenschmelzen der Teilchen zu verhindern, wobei die erste Temperatur maximal 20 °C über dem Brechpunkt nach Fraas des elastoplastischen Bitumens liegt.

2. Verfahren nach Anspruch 1, wobei die erste Temperatur etwa bei der Brechpunkttemperatur nach Fraas liegt.

3. Verfahren nach Anspruch 1, wobei die Fugenfüllmasseteilchen vor der Verwendung mit einem haftverstärkenden Mittel (12) beschichtet werden, das dazu ausgelegt ist, die Haftung der teilchenförmigen Fugenfüllmasse an einer Oberfläche zu verbessern, wobei das klebstoffverstärkende Mittel (12) eine Emulsion auf Bitumenbasis ist.

4. Verfahren zum Füllen von Fugen mit einer teilchenförmigen Fugenfüllmasse, die nach einem der Ansprüche 1-3 bereitgestellt ist, **dadurch gekennzeichnet, dass** das Verfahren die Schritte umfasst:
Anordnen der Fugenfüllmasseteilchen in einer Nut zwischen zu verfugenden Elementen (21, 31, 33), und
Zusammenschmelzen der Teilchen zu einer im Wesentlichen homogenen Masse, die an benachbarten Oberflächen bei einer Umgebungstemperatur zwischen 0 °C und 40 °C haftet.

5. Verfahren nach Anspruch 4, wobei die Klebeeigenschaften des elastoplastischen Bindemittels (11) durch Wärmeaustausch mit der Umgebung verstärkt werden.

6. Verfahren nach Anspruch 4 oder 5, wobei:
- die Klebeeigenschaften der Fugenfüllmasseteilchen bei einer Temperatur von mindestens 20 °C über der Brechpunkttemperatur nach Fraas aktiviert werden.

7. Verfahren nach Anspruch 4, wobei
- die thermische Aktivierung der Klebeeigenschaften der Fugenfüllmasseteilchen durch Erwärmen auf Umgebungstemperatur durch Wärmeaustausch mit benachbarten Nuten und Luft erfolgt.

8. Verfahren nach Anspruch 4, wobei die thermische Aktivierung der Klebeeigenschaften der Fügefüllmasseteilchen durch Erwärmen mit einem Heizgerät erfolgt.

9. Verfahren nach Anspruch 4, **dadurch gekennzeichnet, dass**
- die Nut durch Schaben oder Bürsten von Fugenfüllmasseteilchen von an die Nutflächen angrenzenden Oberflächen aufgefüllt wird, oder
- die zu verfugenden Elemente (21, 31, 33) aus der Gruppe, umfassend Pflastersteine (21) für Verkehrsflächen, Zuschlagsstoffe für Straßen und plattenförmige Baustoffe (31, 33), stammen, oder
- verschiedene Größenfraktionen der Fugenfüllmasseteilchen unmittelbar vor dem Anordnen der Fugenfüllmasseteilchen in der Nut zwischen den zu verfugenden Elementen (21,31,33) gemischt werden, oder
- ein erwärmtes teilchenförmiges Deckmaterial dem oberen Teil der Nut zugegeben und zumindest teilweise in das Fugenfüllmaterial eingepresst wird.

10. Teilchenförmiges Fugenfüllmaterial zur Durchführung des Verfahrens nach einem der Ansprüche 4-9, umfassend eine Vielzahl von Fugenfüllmasseteilchen, die durch mindestens ein elastoplastisches Bindemittel (11) auf Basis von natürlichem, modifiziertem oder synthetischem Bitumen gebildet werden, wobei die Teilchen durch Abtrennen von Teilchen aus einer viskosen Phase des Bitumen-basierten Materials gebildet, die abgetrennten Teilchen bis auf eine feste Phase abgekühlt werden, **dadurch gekennzeichnet, dass** das elastoplastische Bitumen-basierte Material bei einer Temperatur zwischen 0 °C und 40 °C klebrig wird, welche Temperatur dem Brechpunkt nach Fraas des Materials + 20 °C entspricht.

11. Teilchenförmige Fugenfüllmasse nach Anspruch 10, **dadurch gekennzeichnet, dass** die Antihafteigenschaften des natürlichen, modifizierten oder synthetischen Bitumens durch thermische Einwirkung nur bei einer Temperatur unterhalb des Brechpunkts nach Fraas + 20 °C vorhanden sind.

12. Teilchen-Fugenfüllmasse nach Anspruch 10, **dadurch gekennzeichnet, dass**
- die Fugenfüllmasseteilchen mit einem Haftverstärker (12) bedeckt sind, der dazu ausgelegt ist, die elastisch-plastische Haftkraft des Bindemittels (11) auf einer Nutoberfläche zu verstärken.

13. Teilchenförmige Fugenfüllmasse nach Anspruch 10, **dadurch gekennzeichnet, dass** die Fugenfüllmassemischung einen oder mehrere Füllstoffe (13,13') umfasst.

14. Teilchenförmige Fugenfüllmasse nach Anspruch 10, **dadurch gekennzeichnet, dass** die Fugenfüllmasseteilchen (1,1',1") eine im Wesentlichen einheitliche Form und Größe aufweisen und die Fugenfüllmasseteilchen (1, 1', 1") eine Querschnittsfläche im Bereich von 10 bis 155 mm² aufweisen.

## Revendications

1. Procédé de préparation d'une charge de joint particulaire comprenant au moins un liant élasto-plastique (11), à utiliser pour la mise en forme d'un joint d'étanchéité ou d'une couverture continue, **caractérisé en ce que** le procédé comprend les étapes consistant à :
mettre en forme des particules à partir d'un matériau élasto-plastique à base de bitume qui devient collant à une température comprise entre 0°C et 40°C, en séparant les particules d'une phase visqueuse du matériau à base de bitume ;
refroidir les particules séparées en une phase solide ; et
stocker les particules à une première température suffisamment basse pour empêcher une fonte par fusion des particules, dans lequel ladite première température est au maximum 20°C au-dessus du point de rupture Fraas du bitume élasto-plastique.

2. Procédé selon la revendication 1, dans lequel la première température est d'environ la température de point de rupture Fraas.

3. Procédé selon la revendication 1, dans lequel les particules de charge de joint, avant utilisation, sont revêtues d'un agent promoteur d'adhérence (12) qui est adapté pour améliorer l'adhérence de la charge de joint particulaire sur une surface, dans lequel l'agent promoteur d'adhérence (12) est une émulsion à base de bitume.

4. Procédé de remplissage de joint avec une charge de joint particulaire selon l'une quelconque des revendications 1 à 3, **caractérisé en ce que** le procédé comprend les étapes consistant à :
agencer les particules de charge de joint dans une rainure entre des éléments (21, 31, 33) à assembler, et
faire fondre par fusion les particules en une masse de substance homogène adhérant aux surfaces adjacentes à température ambiante entre 0°C et 40°C.

5. Procédé selon la revendication 4, dans lequel les propriétés adhésives du liant élasto-plastique (11) sont augmentées par échange de chaleur avec l'environnement.

6. Procédé selon la revendication 4 ou 5, dans lequel :
- les propriétés adhésives des particules de charge de joint sont activées à une température au minimum 20°C au-dessus du point de rupture Fraas.

7. Procédé selon la revendication 4, dans lequel
- l'activation thermique des propriétés adhésives des particules de charge de joint est assurée en les chauffant à température ambiante par échange de chaleur avec des rainures adjacentes et de l'air.

8. Procédé selon la revendication 4, dans lequel l'activation thermique des propriétés adhésives des particules de charge de joint est obtenue en les chauffant avec un dispositif de chauffage.

9. Procédé selon la revendication 4, **caractérisé en ce que**
- la rainure est remplie en grattant ou en brossant des particules de charge de joint à partir de surfaces adjacentes aux surfaces de rainure, ou
- des éléments (21, 31, 33) à assembler sont des pierres de chaussée de groupe (21) destinées à des zones de circulation, des agrégats de routes et des matériaux de construction en forme de plaques (31, 33), ou
- des fractions de taille différente des particules de charge de joint sont mélangées directement avant que les particules de charge des joints ne soient agencées dans la rainure entre les éléments (21, 31, 33) à assembler, ou
- un matériau de couverture particulaire chauffé est ajouté à la partie supérieure de la rainure et pressé au moins partiellement dans le matériau de charge de joint.

10. Matériau de charge de joint particulaire pour la mise en oeuvre du procédé selon l'une quelconque des revendications 4 à 9, comprenant une pluralité de particules de charge de joint formées par au moins un liant élasto-plastique (11) à base de bitume naturel, modifié ou synthétique, dans lequel les particules sont formées par séparation de particules à partir d'une phase visqueuse du matériau à base de bitume, les particules séparées sont refroidies jusqu'à une phase solide, **caractérisé en ce que** le matériau à base de bitume élasto-plastique devient collant à une température comprise entre 0°C et 40°C, température qui correspond au point de rupture Fraas du matériau +20°C.

11. Matériau de charge de joint particulaire selon la revendication 10, **caractérisé en ce que** les propriétés antiadhésives du bitume naturel, modifié ou synthétique dues à l'effet thermique ne sont présentes qu'à une température inférieure au point de rupture Fraas + 20°C.

12. Matériau de charge de joint particulaire selon la revendication 10, **caractérisé en ce que**
- les particules de charge de joint sont recouvertes d'un rehausseur d'adhérence (12) adapté pour améliorer l'adhésivité plastique élastique du liant (11) sur une surface de rainure.

13. Matériau de charge joint particulaire selon la revendication 10, **caractérisé en ce que**
le mélange de charge de joint comprend une ou plusieurs charges (13, 13').

14. Matériau de charge de joint particulaire selon la revendication 10, **caractérisé en ce que**
les particules de charge de joint (1, 1', 1") présentent une forme et une taille uniformes dans la substance, et les particules de charge de joint (1, 1', 1") présentent une aire de section transversale dans la plage de 10 à 155 mm².
